# EUROPEAN PATENT SPECIFICATION

(11) **EP 3 953 426 B1**
(45) Date of publication and mention of the grant of the patent: **17.12.2025**
(21) Application number: 20716473.2
(22) Date of filing: 06.04.2020
(51) Int. Cl.: C09D 11/17, C09D 11/18

(54) **ERASABLE AQUEOUS INK**
LÖSCHBARE WÄSSRIGE TINTE
ENCRE AQUEUSE EFFAÇABLE

(30) Priority: 09.04.2019 EP 19305459
(43) Date of publication of application: 16.02.2022
(73) Proprietor: Société BIC, 92110 Clichy (FR)
(72) Inventor: BOURQUE, Alexander, 77144 MONTEVRAIN (FR); SAUVAGE, Aurore, 45220 GY LES NONAINS (FR)
(74) Representative: Cabinet Beau de Loménie
(86) International application number: PCT/EP2020/059751
(87) International publication number: WO 2020/207966

(56) References cited:
- EP-A1- 1 457 537
- TW-B- I 638 862
- US-A- 5 961 704

## Description

The present invention concerns a writing instrument containing an erasable aqueous non-thermochromic writing ink for porous substrate. This type of inks can be erased by an eraser after writing, in particular by a rubber eraser.

Thermochromic inks are erasable by the use of the heat generated by the friction of the eraser. However, the erasure is reversible with low temperature and therefore the erased draw lines can be regenerated unwantedly. Moreover their use is not possible in countries where the temperature is often high or often very low because color and erasability depends on temperature. Furthermore the colors obtained by the use of these inks are not very vivid and are not resistant to UV-light because of the use of leuco-dyes.

Inks erasable by peeling (such as by a rubber eraser) are known in the art such as in US5661197. However, the dyes used in the polymer-encapsulated colorant disclosed in this document have to be soluble in the monomer intended for its encapsulation. Moreover the monomer has to be insoluble in water in order to perform emulsion polymerization. Furthermore the polymer-encapsulated colorant particles have a very low diameter (between 25 to 1000 nm) and therefore will penetrate deep into the paper fibers and be difficult to erase by mechanical action such as peeling.

US5961704 discloses an erasable aqueous non-thermochromic writing ink containing core-shell dye microcapsules. However it does not disclose a ball pen or a roller pen and the ink described is for a writing board made of an ink-impermeable surface material, which is therefore not a porous substrate.

TWI638862 discloses an erasable aqueous non-thermochromic writing ink containing particles made entirely of a matrix of a polymer in which a dye is present. Therefore it does not disclose an ink containing core-shell dye microparticles.

EP1457537 discloses an erasable aqueous non-thermochromic writing ink containing dense particles. Therefore it does not disclose an ink containing core-shell dye microparticles.

Therefore there is a need to find new writing instrument containing an erasable non-thermochromic inks for porous substrate having a good erasability by mechanical action, avoiding an unwanted color return or an unwanted colorloss due to a change in temperature, having high color intensity and multiple choices of colors.

The inventors have surprisingly found that the use of core-shell dye microparticles, in which the core comprises an organic solvent immiscible with water and at least one dye soluble in said organic solvent and the shell includes a resin component, can resolve the above-mentioned problem and have all the desired above-mentioned advantages. They are also resistant to UV light in order to avoid discoloration under the sun over time.

Furthermore, the erasable aqueous non-thermochromic writing ink composition contained in the writing instrument of invention enables obtaining vivid colors of written marks once applied on porous substrates. An additional advantage of the invention is to enable to include in the ink composition core-shell dye microparticles above a specific size, without clogging the pen point.

The present invention therefore concerns a writing instrument containing an erasable aqueous non-thermochromic writing ink for porous substrate comprising core-shell dye microparticles, wherein the core of said core-shell dye microparticles comprises an organic solvent immiscible with water and at least one dye soluble in said organic solvent and the shell includes a resin component,
wherein the core-shell dye microparticles have a mean diameter D50 measured by dynamic light scattering in the range 4 - 20 µm,
and wherein the writing instrument is a ball pen or a roller pen.

In the sense of the present invention, the expression "comprising a" should be understood as being synonymous with "comprising at least one".

In the sense of the present invention, the expressions "between ... and ..." or "ranging from ... to ..." should be understood as including the values of the limits.

The ink according to the present invention is a non-thermochromic ink. For the purposes of the present invention, the term "non-thermochromic ink" is intended to mean any ink which will not be erased or will not change its color due to a change in temperature such as an increase or a decrease.

The ink according to the present invention is erasable, advantageously by peeling (such as by mechanical friction), in particular by the use of an eraser such as a rubber, more advantageously a rubber which is made of a blend of ethylene-propylene-diene monomer rubber and polypropylene. For the purposes of the present invention, the term "erasable ink" is intended to mean any ink which can be erased after writing. The written mark obtained, in particular on cellulosic fiber paper such as paper (printer paper for example) and cardboard paper, by this ink can therefore be erased just after writing such as less than 5 second after writing, and also even a few days after writing.

The ink according to the present invention is advantageously irreversibly erased. It is therefore an irreversible erasable ink.

The ink according to the present invention is a writing ink. For the purposes of the present invention, the term "writing ink" is intended to mean any ink which is intended to be used in a writing instrument, in particular in a pen such as a ball-pen. A writing ink should not be confused with a printing ink which is used in printing machines and which does not have the same technical constraints and thus the same specifications. Indeed, a writing ink must not contain solid particles of which the size is greater than the channels of the writing instrument, in order to avoid blocking them, which would inevitably lead to writing being irreversibly stopped. It must also dry sufficiently rapidly to avoid smudging the writing medium. It must also avoid the problems of migration (bleeding) over time. Thus, the ink according to the present invention is suitable for the writing instrument for which it is intended: ball pen or a roller pen.

Advantageously, the erasable aqueous non-thermochromic writing ink composition of invention enables obtaining vivid colors of written marks once applied on porous substrates (also named porous surfaces). For the purposes of the present invention, the term "porous substrate" is intended to mean substrate that contains pores. The porous substrates have empty spaces or pores that allow external matter, like ink, to penetrate into the substrate.

Specifically, the ink composition according to the invention comprises solid particles, such as core-shell dye microparticles, in particular above a specific size, without clogging the pen point. Advantageously, the adherence of the composition according to the invention is sufficient to avoid having it being removed inadvertently from the surface on which it had been applied, but allows removing it efficiently when specifically rubbed, in particular with an eraser or friction body, in particular from porous substrate.

Moreover, the ink composition according to the invention shows good stability, in particular with regards to the dispersion of the microparticles; more specifically no sedimentation phenomenon is to be observed.

The ink according to the present invention contains core-shell dye microparticles. For the purposes of the present invention, the term "core-shell dye microparticles" are microscale particles whose core and shell are different in composition and the core contains a dye. Therefore these particles have the function of a coloring agent in the ink according to the present invention. Advantageously these particles have the color of the dyes contained therein.

The core-shell dye microparticles of the ink according to the present invention have a mean diameter in intensity D50 measured by dynamic light scattering such as Malvern Mastersizer 3000E in the range 4 - 20 µm, advantageously in the range 4 - 15 µm, more advantageously in the range 4 - 12 µm, still more advantageously in the range 4 -8 µm.

Indeed if the mean diameter D50 is lower than 4 µm, there is a high probability that the microparticles will penetrate deep into the paper fibers and will be difficult to erase.

Moreover if the mean diameter D50 is higher than 20 µm, there is a high probability that there will be a clogging of the point of the ballpoint pen and this ink will not be usable with such a writing instrument.

The core-shell dye microparticles can have different forms, but advantageously they are spherical and therefore the microparticles are microspheres, more advantageously the microparticles are microcapsules. In an advantageous manner, the amount of the core-shell dye microparticles in the ink according to the present invention is within the range 5-40 weight %, preferably 10-35 weight %, more preferably 15-30 weight% based on the total weight of the ink.

Ink compositions of the present invention enable surprisingly to obtain core-shell microcapsules of a diameter mean diameter in intensity D50 above a specific size, sufficient to prevent those from penetrating into the spaces or pores of the porous substrate (such as paper) and at the same time, without clogging the pen point.

Without wishing to be bound to a theory, the core-shell microcapsules present in the ink composition of the present invention are believed to be supple enough to avoid these from clogging the pen point, on contrary to harder particles.

The core of the microparticles comprises an organic solvent immiscible with water and at least one dye soluble in said organic solvent, and advantageously insoluble in water. For the purposes of the present invention, the term "an organic solvent immiscible with water" is intended to mean any organic solvent having a solubility in water lower than 30g/L. The organic solvent of the microparticle's core is therefore immiscible with water and advantageously selected in the group consisting of petroleum solvents such as paraffinic alkanes, esters such as isopropyl myristate and octyl acetate, ethers such as dibutyl ether, aryl ethers and arylalkyl ethers, glycol ethers such as 2-phenoxyethanol, fatty alcohols such as 1-octadecanol, amines, terpenes, naphthenic solvent such as alkylated naphthalene, halogenated solvents such as trichloromethane, chlorinated diphenyl, chlorinated paraffin and monochlorobenzene, ketones such as heptadecan-9-one, cottonseed oil, groundnut oil, silicone oil, tricresyl phosphate, partially hydrogenated terphenyls, alkylated diphenyls and mixture thereof, more advantageously it is selected in the group consisting of petroleum solvents such as paraffinic alkanes, esters such as isopropyl myristate and octyl acetate, ethers such as dibutyl ether, glycol ethers such as 2-phenoxyethanol, fatty alcohols such as 1-octadecanol, amines, terpenes, naphthenic solvent, halogenated solvents such as trichloromethane, chlorinated diphenyl, chlorinated paraffin and monochlorobenzene, ketones such as heptadecan-9-one and mixture thereof, still more advantageously it is selected in the group consisting of isopropyl myristate, heptadecan-9-one, 1-octadecanol and mixture thereof, in particular it is 1-octadecanol.

Advantageously the organic solvent content of the microparticle's core is in the range 75-98 weight % based on the total weight of the microparticle's core, more advantageously in the range 80-95 weight % based on the total weight of the microparticle's core, still more advantageously in the range 85-90 weight % based on the total weight of the microparticle's core.

The microparticle's core also contains at least one dye, in particular a mixture of dyes, which is soluble in said organic solvent. Advantageously the dye is insoluble in water. The dye can be selected for example in the group consisting for Sudan Red 380, Sudan blue 670, Baso Red 546, Baso Blue 688, Sudan yellow 150, Baso Blue 645, Flexo Yellow 110, Flexo Blue 630, Oil Red 235, Morfast Yellow 101, Nitro Fast Yellow B, Macrolex Yellow 6 G, Solvent Yellow 14, 16 and 21, Solvent Orange 45, 62, Solvent Red 1, 7, 8, 49, 119, and 125, Solvent Blue 5, 14, 25, 36 and 51 and Solvent Black 5 and 34 and mixtures thereof. The dye can belong to the solvent dye class such as : triphenylmethane compounds such as 3,3-bis-(p-dimethylaminophenyl)-6-dimethylaminophtalide (« crystal violet lactone ») and 3,3-bis-(p(dimethyl-amino-phenyl)-phtalide (« malachite green lactone »), diphenylmethane compounds such as 4,4-bis-dimethylaminobenzhydryl benzyl ether, N-2,4,5-trichlorophenylleucauramine N-halogenophenylleucauramine, N-β-naphthylleucauramine, N-2,4-dichlorophenylleucauramine, xanthene compounds such as rhodamine-β-anilinolactam, rhodamine-β-(p-nitroaniline)-lactam, rhodamine-β-(p-chloroaniline)-lactam, 7-dimethylamine-2-methoxy-fluoran, 7-diethylamine-3-methoxyfluoran, 7-diethylamine-3-methylfluoran, 7-diethylamine-3-chlorofluoran, 7-diethylamine-3-chloro-2-methylfluoran, 7-diethylamine-2,4-dimethylfluoran, 7-diethylamine-2,3-dimethylfluoran, 7-diethylamine-(3-acetyl-methylamine)-fluoran, 7-diethyl-amine-3-methylfluoran, 3,7-diethyl-aminefluoran, 7-diethylamino-3-(diebnzylamine)-fluoran, 7-diethylamine-3-(methylbenzylamine)-fluorane), 7-diethylamine-3-(dichlorethylamine)-fluoran, 7-diethylamine-3-(diethylamine)-fluoran, thiazine compounds such as N-benzoylleucomethylene blue, o-chlorobenzoylleucomethylene blue and p-nitrobenzoylleucomethylene blue, and spiropyran compounds such as 3-methyl-2-2'-spiro-bis-(benzo(f)-chromene). It can be any mixtures of these dyes.

Advantageously, the dye content of the microparticle's core is in the range 2-25 weight % based on the total weight of the microparticle's core, more advantageously in the range 5-20 weight % based on the total weight of the microparticle's core, still more advantageously in the range 10-15 weight % based on the total weight of the microparticle's core.

The microparticle's core can contain other components well known by the one skilled in the art such as antioxidants, anti-UV agents, pH-adjustors and mixtures thereof. Advantageously it does not contain any other components and consists of the organic solvent and at least one dye. Still more advantageously it is the at least one dye (in particular the mixture of dyes) contained in the core of the microparticle which will give the color to the microparticle.

The shell of the microparticle includes a resin component which is advantageously insoluble in water. More advantageously the precursor of the resin component (used during the process of preparation of the core-shell microparticle) is soluble in water.

The resin component can be selected in the group consisting of polymer of urethane resin, melamine resin, urea resin, benzoguanamine resin, phenol resin, epoxy resin, natural polymers such as sodium alginate, gelatin cellulosic polymer such as ethylcellulose, hydroxypropylcellulose and mixture thereof, advantageously it is a melamine resin.

The shell can contain other components well known by the one skilled in the art such as a surfactant. Advantageously it does not contain any coloring agent such as a dye or a pigment. More advantageously the shell consists in the resin component only and therefore does not contain any other component. Still more advantageously, the resin component is not a colored resin component and the shell can be colorless or even transparent.

The aqueous erasable ink according to the present invention contains water as the solvent. Advantageously the amount of water in the ink according to the present invention is comprised between 20-80 weight %, preferably 30-70 weight % based on the total weight of the ink.

Advantageously, the ink comprises a rheology modifying agent, in particular capable of generating a gelling effect, more advantageously selected in the group consisting of synthetic polymers (for example polyacrylic acids, polyvinyl alcohol, polyethylene oxide, polyvinylpyrrolidone, polyvinyl methyl ether, polyacrylamide and mixture thereof), cellulosic derivatives (such as cellulose nanofibers, hydroxyethyl cellulose, carboxymethylcellulose and mixture thereof), polysaccharides (such as xanthan gum, gum arabic, carrageenan (in particular kappa and/or iota carrageenan, preferably iota carrageenan), guar gum, casein, gelatin, alginic acid and salts thereof (in particular sodium alginate), tragacanth gum, locust beam gum and mixture thereof), still more advantageously selected in the group consisting of xanthan gum, gum arabic, carrageenan, cellulose nanofibers, polyvinylpyrrolidone, cellulosic derivatives such as hydroxyethylcellulose, carboxymethylcellulose, and mixture thereof, in particular selected in the group consisting of xanthan gum, polyvinylpyrrolidone and mixture thereof, more particularly it is xanthan gum.

Advantageously the amount of the rheology modifying agent in the ink according to the present invention is comprised between 0.05-5 weight %, preferably 0.1-3 weight %, more advantageously 0.2-2.5 weight %, based on the total weight of the ink.

The erasable aqueous non-thermochromic writing ink according to the present invention can contain other additives known by the one skilled in the art to be usable in aqueous inks, advantageously selected in the group comprising water miscible solvents, anti-microbial agents, corrosion inhibitor agents, anti-foam agents, pH regulator agents, lubricants, coalescing agents, crosslinking agents, wetting agents, humectants, antioxidants, UV stabilizers, film-forming agents, dispersing agents, fungicides and mixture thereof.

Advantageously the additive content of the ink according to the present invention is within the range 10-35 weight %, more preferably 15-30 weight %, based on the total weight of the ink according to the present invention.

The ink according to the present invention can therefore advantageously contain at least a water miscible solvent such as polar solvents. Advantageously the water miscible solvent can be selected in the group consisting of:
- glycol such as ethylene glycol, diethylene glycol, triethylene glycol, polyethylene glycol, propylene glycol,
- glycol ethers such as ethylene glycol monomethyl ether, ethylene glycol monoethyl ether, diethylene glycol monomethyl ether, diethylene glycol monoethyl ether, diethylene glycol monobutyl ether, dipropylene glycol monomethyl ether, dipropylene glycol monobutyl ether, dipropylene glycol monopropyl ether, tripropylene glycol monomethyl ether, and mixture thereof,
- alcohols such as linear or branched alcohol in C₁-C₆ for example isopropanol, butanol, isobutanol, pentanol, benzyl alcohol, glycerin, diglycerin, polyglycerin and mixture thereof,
- carbonate esters such as propylene carbonate, ethylene carbonate and mixture thereof,
- lactame such as 2-pyrrolidone, N-methyl 2-pyrrolidone and mixture thereof,
- ketones such as methylisobutylketone (MIBK), acetone, cyclohexanone and mixture thereof,
- and mixtures thereof.

In an advantageous embodiment, the water miscible solvent is selected in the group consisting of glycol ethers, and more advantageously selected in the group consisting of glycerin, triethylene glycol, polyethylene glycol, 2-pyrrolidone, and mixture thereof, still more advantageously it is glycerin. Advantageously, the water miscible solvent is present in the aqueous ink according to the present invention in an amount ranging from 5 to 50 weight %, more advantageously from 10 to 40 weight %, and even more advantageously from 15 to 35 weight %, relative to the total weight of the aqueous ink.

The aqueous ink according to the present invention can contain an antimicrobial agent such as benzoic acid, sorbic acid, carbonic acid, zinc pyrrithione, sodium pyrrithione, sorbate, 2-bromo-2-nitropropane-1,3 diol (Bronopol^{®} from Boots Company), isothiazolinones (ACTICIDE^{®} from Thor), advantageously selected in the group consisting of 1,2-benzisothiazolin-3-one, 2-methyl-4-isothiazolin-3-one, and mixture thereof.

Advantageously, the antimicrobial agent is present in the aqueous ink according to the invention in an amount ranging from 0.01 to 1 weight %, more advantageously ranging from 0.05 to 0.5 weight %, relative to the total weight of the aqueous ink.

The aqueous ink according to the present invention may comprise a corrosion inhibitor, advantageously selected in the group consisting of dicyclohexylammonium nitrile, diisopropylammonium nitrile, saponins, tolytriazole, benzotriazole, and mixture thereof, more advantageously selected in the group consisting of tolytriazole, benzotriazole, and mixture thereof.

Advantageously, the corrosion inhibitor is present in the aqueous ink of the invention in an amount ranging from 0.01 to 1 weight %, more advantageously ranging from 0.05 to 0.5 weight %, relative to the total weight of the aqueous ink.

The aqueous ink according to the present invention may comprise an antifoam agent, preferably a polysiloxane-based antifoam agent, and more preferably an aqueous emulsion of modified polysiloxane (such as MOUSSEX^{®} from Synthron, TEGO^{®} Foamex from Evonik).

Advantageously, the antifoam agent is present in the aqueous ink according to the present invention in an amount ranging from 0.01 to 1.5 weight %, more advantageously from 0.10 to 1 weight %, relative to the total weight of the aqueous ink.

The aqueous ink according to the present invention may comprise a film-forming agent which allows the fixation of the microparticles on the paper and avoids therefore the erasure of the ink by simply brushing it with the fingers or another sheet of paper while being erasable by a conventional eraser, such as a rubber eraser. It can be selected in the group consisting of polyvinylpyrrolidone, polyvinyl alcohol, an acrylic polymer, latex such as diene rubber such as a styrene-butadiene rubber, an acrylonitrilebutadiene rubber, a cis-1,4-polyisoprene rubber, and mixture thereof. Advantageously, the film-forming agent is present in the aqueous ink according to the present invention in an amount ranging from 0.5 to 10 weight %, more advantageously from 1 to 7 weight %, relative to the total weight of the aqueous ink.

The aqueous ink according to the present invention may comprise a dispersing agent which is used for the stabilization of the microparticles in the ink in order to avoid the sedimentation, aggregation and maturation of the microparticles, such as fatty alcohols salts, fatty amines salts, polyurethanes, polyethers, polyacrylic salts, polyols.

Advantageously, the dispersing agent is present in the aqueous ink according to the present invention in an amount ranging from 0.05 to 5 weight %, more advantageously from 0.1 to 3 weight %, relative to the total weight of the aqueous ink.

The aqueous ink according to the present invention may comprise other additives such as pH regulator agents, lubricants, coalescing agents, crosslinking agents, wetting agents, humectants, antioxidants, UV stabilizers, fungicides and mixture thereof. Advantageously the other additive content of the ink according to the present invention is within the range 0.5-20 weight %, more preferably 1-15 weight %, based on the total weight of the ink according to the present invention.

The lubricants can be fatty acids, such as oleic acid and its derivatives, polyether modified silicone oils, thiophosphite triesters, phosphate derivatives such as phosphoric ester, phosphate monoester of polyoxyethylene alkyl ether or polyoxyethylene aryl ether, phosphate diester of polyoxyethylene alkyl ether.

The pH controlling agent can be ammonia, urea, monoethanolamine, diethanolamine, triethanolamine, alkali metal salts of phosphoric acid such as tripolyphosphate, sodium carbonate and hydroxides of alkali metals such as sodium hydroxide.

Advantageously the ink according to the present invention does not contain any other coloring agent than the core-shell dye microparticles. Therefore the core-shell dye microparticles are the only coloring agent of the ink according to the present invention. More advantageously the ink does not contain any pigment.

Still more advantageously the ink does not contain any other microparticles or nanoparticles or resin particles (even colorless ones) than the core-shell dye microparticles.

In an advantageous embodiment the ink according to the present invention is a non-photochromic ink. For the purposes of the present invention, the term "non-photochromic ink" is intended to mean any ink which will not be erased or will not change its color due to a change in UV light such as an increase or a decrease.

Advantageously the aqueous ink composition is not an emulsion. More specifically, the composition according to the invention is essentially free of a solvent which is immiscible with water, in particular does not comprise an organic solvent which is immiscible with water. According to this preferred embodiment, only the core of the microparticles comprise an organic solvent immiscible with water, in particular the rest of the ink composition does not comprise a solvent which is immiscible with water. The ink composition according to the invention shows good stability, in particular with regards to the dispersion of the microparticles; more specifically no sedimentation phenomenon is to be observed.

The writing instrument of the invention is a ball-pen or a roller pen, more advantageously it is a ball pen, and contains the erasable aqueous non-thermochromic writing ink according to the present invention.

Advantageously the writing instrument according to the present invention contains a rubber, in particular located on the cap or on the non-writing end of the writing instrument, more particularly the rubber being made of a blend of ethylene-propylene-diene monomer rubber and polypropylene. More advantageously the writing instrument according to the present invention comprises:
- an axial barrel containing the erasable aqueous non-thermochromic writing ink according to the invention, and
- a pen body which delivers the erasable aqueous non-thermochromic writing ink stored in the axial barrel.

The present invention describes a process of preparation of the erasable aqueous non-thermochromic writing ink according to the present invention, comprising the following steps:
a- preparation of the core-shell dye microparticles dispersed in water;
b- addition of the preparation obtained in step a) in an aqueous ink composition;
c- recovery of the erasable aqueous non-thermochromic writing ink obtained in step b).

Step a) of the process described in the present invention can be any micro-encapsulation process known conventionally in the art such as
- any chemical process which rely on *in situ* formation of coating microcapsules such as interfacial polymerization or polycondensation, these processes being the preferred ones;
- any physicochemical process, such as phase separation or coacervation, by solvent evaporation-extraction, by thermal gelation of emulsions (hot-melt) or
- any mechanical process, such as spray-drying, droplets gelation or freezing, spray-coating.

Advantageously the resin precursor used in step a) is soluble in water. Advantageously the core-shell dye microparticles in step a) are obtained by the use of *in situ* polymerization, in particular from melamine resin.

At the end of step a), slurry of the microparticles dispersed in water can be obtained.

Advantageously the process described in the present invention comprises before step b) a step a1) of preparation of an aqueous ink composition. This step a1) can be carried out by any method known by the one skilled in the art such as the mixing of the ink ingredients, in particular under agitation, more advantageously under heating, for example at 30°C.

Step b) of the process described in the present invention can be carried out under heating, advantageously at a temperature between 25 and 40°C, in particular at 30°C.

It is advantageously carried out under agitation.

The ink obtained in step b) can be homogenized during a certain period of time, advantageously several hours, in particular at least 3 hours.

Finally the present invention describes the use of core-shell dye microparticles, wherein the core of said core-shell dye microparticles comprises an organic solvent immiscible with water and at least one dye soluble in said organic solvent and the shell includes a resin component, as a coloring agent in an aqueous non-thermochromic writing ink, in particular as described above, advantageously as the only coloring agent. In particular the core-shell dye microparticles are as described above. More advantageously the aqueous non-thermochromic writing ink is an erasable ink, such as described above.

The present invention will be understood more clearly in the light of the example which follows, which is given in a non-limiting way.

### Example 1: preparation of an erasable aqueous non-thermochromic writing ink according to the invention

### a) preparation of the core-shell dye microparticles according to the invention:

10 parts of Solvent yellow 14 dye are added to 90 parts of octadecane-1-ol at 70°C until complete dissolution.

3.6 parts of an aqueous solution of anhydride maleic / methylvinylether copolymer (33% by weight of copolymer in water) are neutralized with 4.4 parts of aqueous solution of sodium hydroxide (1M). This solution is diluted with 46.4 parts of water. This solution is homogenized with high speed homogenizer at a minimum speed of 5 m.s⁻¹. 27.8 parts of the previous mix with dye and octadecane-1-ol solution are added to the reaction mixture. This reaction mixture is emulsified at 80°C for 30 minutes.

17.8 parts of a melamine / formaldehyde pre-polymer solution (50% weight solution of pre-polymer in water) are added dropwise to the reaction mixture. The reaction mixture is homogenized at 5 m.s⁻¹ at 90°C for 4 hours.

A slurry (dispersion of microcapsules in water) containing approximatively 35% by weight of microcapsules, is obtained. The D50 mean in intensity particle size diameter was measured as being 5.8 µm via dynamic light scattering (Malvern Mastersizer 3000E).

### b) Yellow ink preparation protocol:

10.5 parts of glycerin are heated at 30°C, 0.2 parts of benzotriazole, 0.1 parts of 1,2-benzisothiazolin-3-one aqueous solution (containing 2.5 weight % 1,2-benzisothiazolin-3-one in water), 0.1 parts of 2-methyl-4-isothiazolin-3-one aqueous solution (containing 2.5 weight % 2-methyl-4-isothiazolin-3-one in water) are added. After dissolution, 0.5 parts of xanthan gum are added. After dispersion of the xanthan gum, 28.6 parts of demineralized water is added slowly. After complete addition of the demineralized water, the previously made slurry (60 parts) is slowly added. The mixture is homogenized 3 hours at 30°C.

This ink is degassed under reduced pressure. The ink obtained is a gel ink for ball point pen.

The erasability of the yellow thus obtained is evaluated by measuring the color difference (ΔE) of the ink before and after erasing.

The color difference is measured using a spectro-colorimeter (Spectrocolorimeter Konica Minolta - Illuminated with a CIE D65 light source and measured 10° observer angle)

Protocol:
1. A writing mark is realized with the ink as prepared above using a ball point pen on standard paper ISO12575.
2. The writing mark is erased with a rubber (BIC Plast-Office) a few minutes after writing.
3. The erased writing mark is measured with the Spectrocolorimeter Konica Minolta.
4. Measurement of ΔE (difference between the erased writing mark and the blank paper)

If the color difference ΔE is less than 10, then the erasability is good. In this experimental test, ΔE = 4.2

## Claims

1. Writing instrument containing an erasable aqueous non-thermochromic writing ink for porous substrate comprising core-shell dye microparticles,
wherein the core of said core-shell dye microparticles, comprises an organic solvent immiscible with water and at least one dye soluble in said organic solvent and the shell includes a resin component,
wherein the core-shell dye microparticles have a mean diameter D50 measured by dynamic light scattering in the range 4 - 20 µm,
and wherein the writing instrument is a ball pen or a roller pen.

2. Writing instrument according to claim 1, wherein the core-shell dye microparticles have a mean diameter in intensity D50 measured by dynamic light scattering in the range 4 - 15 µm, advantageously in the range 4 - 12 µm, still more advantageously in the range 4 -8 µm.

3. Writing instrument according to any one of claims 1 or 2, wherein the core-shell dye microparticles are microspheres, advantageously microcapsules.

4. Writing instrument according to any one of claims 1 to 3, wherein the amount of the core-shell dye microparticles in the ink is within the range 5-40 weight %, preferably 10-35 weight %, more preferably 15-30 weight% based on the total weight of the ink.

5. Writing instrument according to any one of claims 1 to 4, wherein the organic solvent of the microparticle's core is immiscible with water and selected in the group consisting of petroleum solvents such as paraffinic alkanes, esters such as isopropyl myristate and octyl acetate, ethers such as dibutyl ether, aryl ethers and arylalkyl ethers glycol ethers such as 2-phenoxyethanol, fatty alcohols such as 1-octadecanol, amines, terpenes, naphthenic solvent such as alkylated naphthalene, halogenated solvents such as trichloromethane, chlorinated diphenyl, chlorinated paraffin and monochlorobenzene, ketones such as heptadecan-9-one, cottonseed oil, groundnut oil, silicone oil, tricresyl phosphate, partially hydrogenated terphenyls, alkylated diphenyls and mixture thereof, advantageously it is selected in the group consisting of isopropyl myristate, heptadecan-9-one, 1-octadecanol and mixture thereof, in particular it is 1-octadecanol.

6. Writing instrument according to any one of claims 1 to 5, wherein the organic solvent content of the microparticle's core is in the range 75-98 weight % based on the total weight of the microparticle's core, advantageously in the range 80-95 weight % based on the total weight of the microparticle's core, still more advantageously in the range 85-90 weight % based on the total weight of the microparticle's core.

7. Writing instrument according to any one of claims 1 to 6, wherein the resin of the shell's microparticle is selected in the group consisting of polymer of urethane resin, melamine resin, urea resin, benzoguanamine resin, phenol resin, epoxy resin, natural polymers such as sodium alginate, gelatin cellulosic polymer such as ethylcellulose, hydroxypropylcellulose and mixture thereof, advantageously it is a melamine resin.

8. Writing instrument according to any one of claims 1 to 7, wherein the ink comprises a rheology modifying agent, advantageously selected in the group consisting of xanthan gum, gum arabic, carrageenan, cellulose nanofibers, polyvinylpyrrolidone, cellulosic derivatives such as hydroxyethylcellulose, carboxymethylcellulose, and mixture thereof, advantageously it is xanthan gum.

9. Writing instrument according to any one of claims 1 to 8, wherein the ink contains other additives, advantageously selected in the group comprising water miscible solvents, anti-microbial agents, corrosion inhibitor agents, anti-foam agents, pH regulator agents, lubricants, coalescing agents, crosslinking agents, wetting agents, humectants, antioxidants, UV stabilizers, film-forming agents, dispersing agents, fungicides and mixture thereof, preferably at least a water miscible solvent, preferably present in an amount ranging from 5 to 50 weight %, more advantageously from 10 to 40 weight %, and even more advantageously from 15 to 35 weight %, relative to the total weight of the aqueous ink.

10. Writing instrument according to any one of claims 1 to 9, wherein the ink is erasable by peeling from porous substrate, advantageously by the use of a rubber, more advantageously a rubber which is made of a blend of ethylene-propylene-diene monomer rubber and polypropylene.

11. Writing instrument according to any one of claims 1 to 10, wherein the core-shell dye microparticles are the only coloring agent of the ink.

12. Writing instrument according to any one of claims 1 to 11, wherein the writing instrument is a ball pen.

13. Writing instrument according to any one of claims 1 to 12, wherein it contains a rubber, advantageously located on the cap or on the non-writing end of the writing instrument, still more advantageously the rubber being made of a blend of ethylene-propylene-diene monomer rubber and polypropylene.

14. The writing instrument according to any one of claims 1 to 13, wherein the writing ink is for cellulosic fiber paper.

15. The writing instrument according to any one of claims 1 to 13, wherein the porous substrate is paper.

## Patentansprüche

1. Schreibinstrument, das eine löschbare wässrige, nicht thermochrome Schreibtinte für poröse Substrate enthält, umfassend Kern-Hülle-Farbstoffmikropartikel, wobei der Kern der Kern-Hülle-Farbstoffmikropartikel ein mit Wasser nicht mischbares organisches Lösungsmittel und mindestens einen Farbstoff umfasst, der in dem organischen Lösungsmittel löslich ist, und die Hülle eine Harzkomponente einschließt,
wobei die Kern-Hülle-Farbstoffmikropartikel einen mittleren Durchmesser D50, der durch dynamische Lichtstreuung gemessenen wird, in dem Bereich von 4-20 µm aufweisen und wobei das Schreibinstrument ein Kugelschreiber oder ein Rollstift ist.

2. Schreibinstrument nach Anspruch 1, wobei die Kern-Hülle-Farbstoffmikropartikel einen mittleren Durchmesser in einer Intensität D50, gemessen durch dynamische Lichtstreuung, in dem Bereich von 4-15 µm, vorteilhafterweise in dem Bereich von 4-12 µm, noch vorteilhafter in dem Bereich von 4-8 µm, aufweisen.

3. Schreibinstrument nach einem der Ansprüche 1 oder 2, wobei die Kern-Hülle-Farbstoffmikropartikel Mikrokugeln, vorteilhafterweise Mikrokapseln, sind.

4. Schreibinstrument nach einem der Ansprüche 1 bis 3, wobei die Menge der Kern-Hülle-Farbstoffmikropartikel innerhalb der Tinte in dem Bereich von zu 5-40 Gew.-%, vorzugsweise zu 10-35 Gew.-%, mehr bevorzugt 15-30 Gew.-%, basierend auf dem Gesamtgewicht der Tinte, liegt.

5. Schreibinstrument nach einem der Ansprüche 1 bis 4, wobei das organische Lösungsmittel des Mikropartikelkerns nicht mit Wasser mischbar ist und aus der Gruppe ausgewählt ist, bestehend aus Petroleumlösungsmitteln wie Paraffinalkanen, Estern wie Isopropylmyristat und Octylacetat, Ethern wie Dibutylether, Arylethern und Arylalkylethern, Glycolethern wie 2-Phenoxyethanol, Fettalkoholen wie 1-Octadecanol, Aminen, Terpenen, naphtenhaltigen Lösungsmitteln wie alkyliertem Naphthalin, halogenierten Lösungsmitteln wie Trichlormethan, chloriertem Diphenyl, chloriertem Paraffin und Monochlorbenzol, Ketonen wie Heptadecan-9-on, Baumwollsamenöl, Erdnussöl, Silikonöl, Tricresylphosphat, teilweise hydrierten Terphenylen, alkylierten Diphenylen und Mischungen davon, vorzugsweise es aus der Gruppe ausgewählt ist, bestehend aus Isopropylmyristat, Heptadecan-9-on, 1-Octadecanol und Mischungen davon, insbesondere es 1-Octadecanol ist.

6. Schreibinstrument nach einem der Ansprüche 1 bis 5, wobei der Gehalt des Mikropartikelkerns an organischem Lösungsmittel in dem Bereich von zu 75-98 Gew.-%, basierend auf dem Gesamtgewicht des Mikropartikelkerns, vorteilhafterweise in dem Bereich von zu 80-95 Gew.-%, basierend auf dem Gesamtgewicht des Mikropartikelkerns, und noch vorteilhafter in dem Bereich von zu 85-90 Gew.-%, basierend auf dem Gesamtgewicht des Mikropartikelkerns, liegt.

7. Schreibinstrument nach einem der Ansprüche 1 bis 6, wobei das Harz der Mikropartikel der Schale aus der Gruppe ausgewählt ist, bestehend aus Polymeren von Urethanharz, Melaminharz, Harnstoffharz, Benzoguanaminharz, Phenolharz, Epoxidharz, natürlichen Polymeren wie Natriumalginat, Gelatine-Cellulosepolymer wie Ethylcellulose, Hydroxypropylcellulose und Mischungen davon, wobei es vorteilhafterweise ein Melaminharz ist.

8. Schreibinstrument nach einem der Ansprüche 1 bis 7, wobei die Tinte ein Rheologiemodifizierungsmittel umfasst, das vorteilhafterweise aus der Gruppe ausgewählt ist, bestehend aus Xanthangummi, Gummi arabicum, Carrageen, Cellulose-Nanofasern, Polyvinylpyrrolidon, Cellulosederivaten wie Hydroxyethylcellulose, Carboxymethylcellulose und Mischungen davon, wobei es vorteilhafterweise Xanthangummi ist.

9. Schreibinstrument nach einem der Ansprüche 1 bis 8, wobei die Tinte weitere Additive enthält, die vorteilhafterweise aus der Gruppe ausgewählt sind, umfassend mit Wasser mischbaren Lösungsmitteln, antimikrobiellen Mitteln, Korrosionsinhibitoren, Antischaummitteln, pH-Wert-Regulatoren, Schmiermitteln, Koaleszenzmitteln, Vernetzungsmitteln, Benetzungsmitteln, Feuchthaltemitteln, Antioxidantien, UV-Stabilisatoren, Filmbildnern, Dispergiermitteln, Fungiziden und Mischungen davon, vorzugsweise mindestens ein mit Wasser mischbares Lösungsmittel, das vorzugsweise in einer Menge von zu 5 bis 50 Gew.-%, vorteilhafter von zu 10 bis 40 Gew.-% und noch vorteilhafter von zu 15 bis 35 Gew.-%, basierend auf dem Gesamtgewicht der wässrigen Tinte, vorhanden ist.

10. Schreibinstrument nach einem der Ansprüche 1 bis 9, wobei die Tinte durch Abziehen von einem porösen Substrat löschbar ist, vorzugsweise durch Verwenden eines Kautschuks, noch vorteilhafter eines Kautschuks, der aus einer Mischung von Ethylen-Propylen-Dien-Monomer-Kautschuk und Polypropylen hergestellt wird.

11. Schreibinstrument nach einem der Ansprüche 1 bis 10, wobei die Kern-Hülle-Farbstoffmikropartikel das einzige Färbemittel der Tinte sind.

12. Schreibinstrument nach einem der Ansprüche 1 bis 11, wobei das Schreibinstrument ein Kugelschreiber ist.

13. Schreibinstrument nach einem der Ansprüche 1 bis 12, wobei es einen Kautschuk enthält, der sich vorteilhafterweise auf der Kappe oder auf dem nicht schreibenden Ende des Schreibinstruments befindet, noch vorteilhafter wobei der Kautschuk aus einer Mischung aus Ethylen-Propylen-Dien-Monomer-Kautschuk und Polypropylen hergestellt wird.

14. Schreibinstrument nach einem der Ansprüche 1 bis 13, wobei die Schreibtinte für Zellulosefaserpapier ist.

15. Schreibinstrument nach einem der Ansprüche 1 bis 13, wobei das poröse Substrat Papier ist.

## Revendications

1. Instrument d'écriture contenant une encre d'écriture aqueuse non thermochromique effaçable pour substrat poreux comprenant des microparticules de colorant cœur-écorce,
dans lequel le cœur desdites microparticules de colorant cœur-écorce comprend un solvant organique non miscible à l'eau et au moins un colorant soluble dans ledit solvant organique, et l'écorce comporte un composant de résine,
dans lequel les microparticules de colorant cœur-écorce ont un diamètre moyen D50 mesuré par diffusion dynamique de la lumière compris dans la plage de 4 à 20 µm,
et dans lequel l'instrument d'écriture est un stylo à bille ou un stylo à bille roulante.

2. Instrument d'écriture selon la revendication 1, dans lequel les microparticules de colorant cœur-écorce ont un diamètre moyen en intensité D50 mesuré par diffusion dynamique de la lumière compris dans la plage de 4 à 15 µm, avantageusement dans la plage de 4 à 12 µm, encore plus avantageusement dans la plage de 4 à 8 µm.

3. Instrument d'écriture selon l'une quelconque des revendications 1 ou 2, dans lequel les microparticules de colorant cœur-écorce sont des microsphères, avantageusement des microcapsules.

4. Instrument d'écriture selon l'une quelconque des revendications 1 à 3, dans lequel la quantité des microparticules de colorant cœur-écorce dans l'encre est comprise compris dans la plage de 5 à 40 % en poids, de préférence de 10 à 35 % en poids, plus préférablement de 15 à 30 % en poids, sur la base du poids total de l'encre.

5. Instrument d'écriture selon l'une quelconque des revendications 1 à 4, dans lequel le solvant organique du cœur des microparticules n'est pas miscible à l'eau et est choisi dans le groupe constitué de solvants pétroliers tels que des alcanes paraffiniques, des esters tels que le myristate d'isopropyle et l'acétate d'octyle, des éthers tels que l'éther dibutylique, des éthers d'aryle et éthers d'arylalkyle, des éthers de glycol tels que le 2-phénoxyéthanol, des alcools gras tels que le 1-octadécanol, des amines, des terpènes, un solvant naphténique tel qu'un naphtalène alkylé, des solvants halogénés tels que le trichlorométhane, le diphényle chloré, la paraffine chlorée et le monochlorobenzène, des cétones telles que l'heptadécan-9-one, l'huile de coton, l'huile d'arachide, l'huile de silicone, le phosphate de tricrésyle, des terphényles partiellement hydrogénés, des diphényles alkylés et mélanges de ceux-ci, avantageusement il est choisi dans le groupe constitué de myristate d'isopropyle, heptadécan-9-one, 1-octadécanol et mélanges de ceux-ci, en particulier il s'agit du 1-octadécanol.

6. Instrument d'écriture selon l'une quelconque des revendications 1 à 5, dans lequel la teneur en solvant organique du cœur des microparticules est comprise dans la plage de 75 à 98 % en poids sur la base du poids total du cœur des microparticules, avantageusement dans la plage de 80 à 95 % en poids sur la base du poids total du cœur des microparticules, encore plus avantageusement dans la plage de 85 à 90 % en poids sur la base du poids total du cœur des microparticules.

7. Instrument d'écriture selon l'une quelconque des revendications 1 à 6, dans lequel la résine de la microparticule de l'écorce est choisie dans le groupe constitué de polymère de résine d'uréthane, de résine de mélamine, de résine d'urée, de résine de benzoguanamine, de résine de phénol, de résine époxy, de polymères naturels tels que l'alginate de sodium, de polymère cellulosique de gélatine tel que l'éthylcellulose, l'hydroxypropylcellulose et mélange de celles-ci, avantageusement il s'agit d'une résine de mélamine.

8. Instrument d'écriture selon l'une quelconque des revendications 1 à 7, dans lequel l'encre comprend un agent modificateur de rhéologie, avantageusement choisi dans le groupe constitué de gomme xanthane, de gomme arabique, de carraghénane, de nanofibres de cellulose, de polyvinylpyrrolidone, de dérivés cellulosiques tels que l'hydroxyéthylcellulose, la carboxyméthylcellulose, et mélange de celles-ci, avantageusement il s'agit de la gomme xanthane.

9. Instrument d'écriture selon l'une quelconque des revendications 1 à 8, dans lequel l'encre contient d'autres additifs, avantageusement choisis dans le groupe comprenant des solvants miscibles à l'eau, agents antimicrobiens, agents inhibiteurs de corrosion, agents anti-mousse, agents régulateurs de pH, lubrifiants, agents coalescents, agents de réticulation, agents mouillants, humectants, antioxydants, stabilisateurs UV, agents filmogènes, agents dispersants, fongicides et mélanges de ceux-ci, de préférence au moins un solvant miscible à l'eau, de préférence présents en une quantité allant de 5 à 50 % en poids, plus avantageusement de 10 à 40 % en poids, et encore plus avantageusement de 15 à 35 % en poids, par rapport au poids total de l'encre aqueuse.

10. Instrument d'écriture selon l'une quelconque des revendications 1 à 9, dans lequel l'encre est effaçable par décollement du substrat poreux, avantageusement par l'utilisation d'un caoutchouc, plus avantageusement un caoutchouc qui est constitué d'un mélange de caoutchouc éthylène-propylène-diène monomère et de polypropylène.

11. Instrument d'écriture selon l'une quelconque des revendications 1 à 10, dans lequel les microparticules de colorant cœur-écorce sont le seul agent colorant de l'encre.

12. Instrument d'écriture selon l'une quelconque des revendications 1 à 11, dans lequel l'instrument d'écriture est un stylo à bille.

13. Instrument d'écriture selon l'une quelconque des revendications 1 à 12, dans lequel il contient un caoutchouc, avantageusement situé sur le capuchon ou sur l'extrémité non d'écriture de l'instrument d'écriture, encore plus avantageusement le caoutchouc étant constitué d'un mélange de caoutchouc éthylène-propylène-diène monomère et de polypropylène.

14. Instrument d'écriture selon l'une quelconque des revendications 1 à 13, dans lequel l'encre d'écriture est destinée à du papier à base de fibres cellulosiques.

15. Instrument d'écriture selon l'une quelconque des revendications 1 à 13, dans lequel le substrat poreux est du papier.
